# FASCICULE DE BREVET EUROPEEN

(11) **EP 3 141 152 B1**
(45) Date de publication et mention de la délivrance du brevet: **23.05.2018**
(21) Numéro de dépôt: 16187051.4
(22) Date de dépôt: 02.09.2016
(51) Int. Cl.: A47B 5/06, B60N 3/00, B60P 3/36, B61D 37/00, B63B 29/06, B64D 11/06

(54) **TABLE AMOVIBLE À ENCOMBREMENT RÉDUIT, NOTAMMENT POUR VÉHICULE FERROVIAIRE**
ZUSAMMENKLAPPBARE KONPAKTE TISCH, BESONDERS FÜR SCHIENENFAHRZEUG
A REMOVABLE TABLE WITH A REDUCED BULK, IN PARTICULAR FOR A RAILWAY VEHICLE

(30) Priorité: 03.09.2015 FR 1558176
(43) Date de publication de la demande: 15.03.2017
(73) Titulaire: ALSTOM Transport Technologies, 93400 Saint-Ouen (FR)
(72) Inventeur: PAILLER, Christophe, 17220 Salles-sur-Mer (FR); MARCONNOT, Jean-Christophe, 17138 Saint-Xandre (FR)
(74) Mandataire: Lavoix

(56) Documents cités:
- CN-U- 203 511 671
- DE-A1- 4 026 391
- DE-A1- 10 010 748
- US-A- 3 635 516

## Description

La présente invention concerne une table amovible pour une salle, notamment une salle de passagers de véhicule de transport public, plus particulièrement de véhicule ferroviaire.

Une telle table amovible comporte un plateau s'étendant, dans une direction longitudinale, entre un premier bord latéral portant des premiers moyens de fixation amovibles à une paroi latérale de la salle et un second bord latéral libre, et un pied central s'étendant entre une première extrémité reliée au plateau et une seconde extrémité comprenant des seconds moyens de fixation amovibles au sol de la salle.

Dans certains cas, il est nécessaire de réorganiser la disposition des tables et des sièges de la salle, par exemple afin de l'adapter au sens de circulation du véhicule de transport public. A cet effet, la table est démontée en désactivant ses premiers et seconds moyens de fixation amovibles, puis elle est déplacée vers un autre point de la salle afin d'y être remontée.

Une telle table est relativement encombrante, si bien que deux opérateurs sont généralement nécessaires pour déplacer la table d'un point à un autre de la salle. En outre, du fait ce cet encombrement, la table risque, lors de son transport, d'entrer en impact contre d'autres éléments de la salle, par exemple d'autres tables ou des sièges, ce qui peut avoir pour effet d'endommager la table ou ces autres éléments.

Une table amovible comprenant un pied central pivotable est connue d'après le document DE 40 26 391 A1.

L'invention a notamment pour but de remédier à cet inconvénient, en fournissant une table amovible du type précité dont le transport dans la salle est facilité.

A cet effet, l'invention a notamment pour objet une table amovible selon la revendication 1..

Le pied central est rabattu d'un côté de la table pour pouvoir être manipulé depuis sa seconde extrémité, le plateau prenant alors appui sur le sol par l'intermédiaire de l'organe d'appui, grâce auquel elle peut être déplacée au sol sans être endommagée.

La table, dont le pied central est rabattu, est peu encombrante, et sa manipulation est facilitée, si bien qu'elle peut être déplacée par un seul opérateur, et que les risques d'impact contre d'autres éléments de la salle sont réduits.

Une table amovible selon l'invention peut comporter en outre l'une ou plusieurs des caractéristiques suivantes, prises seules ou selon toutes combinaisons techniquement envisageables.
- Le pied comporte un organe de préhension à sa seconde extrémité.
- L'organe d'appui présente au moins trois points d'appui délimitant une surface effective d'appui sur laquelle la table peut reposer en position verticale, la table étant conformée pour présenter un centre de gravité, lorsque le pied central est rabattu et que la direction longitudinale du plateau est sensiblement alignée avec une direction verticale, disposé au droit de cette surface effective d'appui dans la direction verticale.
- Le plateau comporte une partie centrale allongée dans la direction longitudinale, et au moins une tablette, chaque tablette étant mobile en rotation autour d'une liaison pivot, d'axe parallèle à la direction longitudinale, par rapport à la partie centrale, entre une position d'utilisation et une position repliée.
- Le pied central porte, à sa première extrémité, au moins un organe de maintien mobile entre une position de butée, dans laquelle l'organe de maintien formant une butée pour la tablette en position repliée, empêchant le déplacement de cette tablette depuis sa position repliée vers sa position d'utilisation, et une position de dégagement dans laquelle l'organe de maintien libère la trajectoire de la tablette, autorisant le déplacement de la tablette depuis sa position repliée vers sa position d'utilisation.
- Chaque organe de maintien est lié au pied central, de sorte que l'organe de maintien est dans sa position de butée lorsque le pied central est rabattu, et dans sa position de dégagement lorsque le pied central est déployé.
- Chaque organe de maintien est formé par une plaquette solidaire du pied central, s'étendant perpendiculairement à un axe de la liaison pivot du pied central.
- La table amovible comprend deux organes de maintien, disposés de part et d'autre de la partie centrale du plateau.

L'invention concerne également un véhicule ferroviaire comportant une salle pour passagers, caractérisé en ce que la salle pour passagers est équipée d'au moins une table amovible telle que définie précédemment.

L'invention sera mieux comprise à la lecture de la description qui va suivre, donnée uniquement à titre d'exemple et faite en se référant aux figures annexées, parmi lesquelles :
- la figure 1 est une vue en perspective d'une table amovible selon un exemple de mode de réalisation de l'invention, en configuration pied déployé ;
- la figure 2 est une vue de profil de la table amovible de la figure 1, en configuration pied replié.

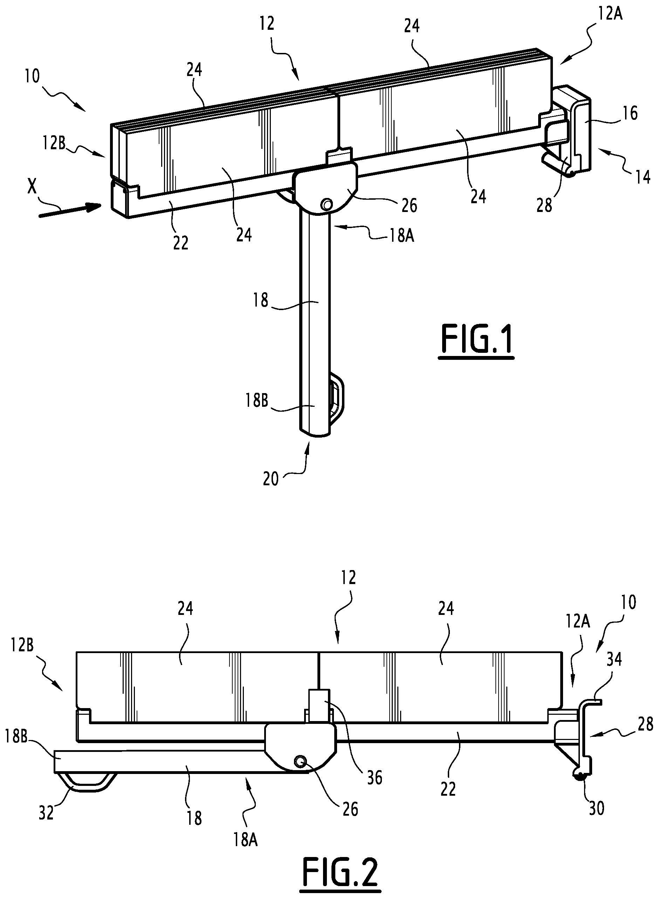

On a représenté, sur la figure 1, une table amovible 10 destinée à équiper une salle, notamment une salle de passagers de véhicule de transport public, et plus particulièrement une salle de passagers de véhicule ferroviaire, par exemple une salle de restauration.

La table 10 comporte un plateau 12 s'étendant dans une direction longitudinale X entre un premier bord latéral 12A comportant des premiers moyens de fixation 14 amovibles destinés à être fixés à une paroi latérale de la salle, et un second bord latéral libre 12B.

Les premiers moyens de fixation amovibles 14 permettent notamment la fixation à un support latéral fixe 16 solidarisé à la paroi latérale de la salle. Ces premiers moyens de fixation amovibles 14 sont de tout type classique envisageable, et ne seront donc pas décrits plus en détail.

La table 10 comporte par ailleurs un pied central 18 s'étendant entre une première extrémité 18A reliée au plateau 12 et une seconde extrémité 18B comprenant des seconds moyens de fixation amovibles 20 au sol de la salle, et plus particulièrement à un support fixe (non représenté) solidaire du sol de la salle. Les seconds moyens de fixation 20 sont de tout type classique envisageable, et ne seront donc pas décrits plus en détail.

La première extrémité 18A du pied central 18 est reliée au plateau 12 par une liaison pivot 26, autorisant le pivotement du pied central 18 pour le rabattre vers l'un des premier 12A ou second 12B bords latéraux du plateau 12. Dans l'exemple, le pied central 18 est rabattable vers le second bord latéral 12B. Avantageusement, la liaison pivot 26 comporte des moyens de blocage du déplacement du pied central 18 vers l'autre bord latéral, si bien que le pivotement du pied central 18 n'est autorisé que vers l'un des premier 12A ou second 12B bords latéraux du plateau 12, et bloqué vers l'autre des premier 12A ou second 12B bords latéraux.

En d'autres termes, le pied central 18 est mobile autour de la liaison pivot 26, entre une position déployée et une position rabattue.

Conformément au mode de réalisation décrit, le plateau 12 comporte une partie centrale 22 allongée dans la direction longitudinale X, et au moins une tablette 24 rabattable. Par exemple, dans l'exemple décrit, le plateau 12 comporte deux tablettes 24 de part et d'autre de la partie centrale 22, donc quatre tablettes 24 en tout.

Chaque tablette 24 est mobile en rotation autour d'une liaison pivot d'axe parallèle à la direction longitudinale X, par rapport à la partie centrale 22, entre une position d'utilisation et une position repliée.

Une tablette 24 en position d'utilisation s'étend sensiblement horizontalement, perpendiculairement au pied 18 déployé. La tablette 24 est en position d'utilisation lorsqu'un utilisateur souhaite l'utiliser.

Une tablette 24 en position repliée s'étend dans un plan formant un angle non nul avec le plan dans lequel s'étend la tablette en position d'utilisation, par exemple un angle de 90°. La tablette 24 est alors sensiblement parallèle au pied 18. La tablette 24 est en position repliée lorsqu'elle n'est pas utilisée, afin d'être moins encombrante. La tablette 24 est également en position repliée lorsque l'on souhaite déplacer la table 10.

La position repliée est celle représentée sur la figure 1. Dans cette position repliée, les tablettes 24 sont disposées les unes en regard des autres, par exemple parallèlement entre elles.

Le plateau 12 comporte, à l'autre des premier 12A ou second 12B bords latéraux, donc dans l'exemple représenté au premier bord latéral 12A, au moins un organe d'appui 28 sur lequel le plateau 12 est destiné à prendre appui lorsque le plateau 12 est posé sur le sol. On dit que le plateau 12 est posé sur le sol lorsqu'il repose sur le sol sans passer par l'intermédiaire du pied 18.

Il est à noter que l'organe d'appui 28 comporte les premiers moyens de fixation 14 dans l'exemple représenté.

L'organe d'appui 28 comporte au moins une roulette 30 ou un patin, destiné à prendre appui sur le sol lorsque le plateau est posé sur le sol et que la table 10 est maintenue par un opérateur à la seconde extrémité 18B du pied central 18 rabattu.

Ainsi, lorsque l'organe d'appui 28 est posé sur le sol et que la table est maintenue à la seconde extrémité 18B du pied 18 rabattu, il est possible de déplacer la table en la faisant rouler sur la roulette 30 ou glisser sur le patin 30, ce qui facilite grandement le déplacement de la table 10, qui peut être réalisé par un seul opérateur.

Avantageusement, comme cela est représenté sur la figure 2, le pied 18 comporte un organe de préhension 32 à sa seconde extrémité 18B, facilitant le maintien et la manipulation de la table par cette seconde extrémité 18B lorsque le pied central 18 est rabattu.

Avantageusement, l'organe d'appui 28 présente au moins trois points d'appui, dont au moins l'un est formé par chaque roulette ou patin 30. Les autres points d'appui sont par exemple portés par une tige 34. Ces points d'appui délimitent ensemble une surface effective d'appui, sur laquelle la table 10 peut reposer en position verticale, c'est-à-dire lorsque la direction longitudinale X du plateau 12 est sensiblement alignée avec une direction verticale.

Afin d'être stable sur cette surface effective d'appui, la table 10 est conformée pour présenter un centre de gravité, lorsque le pied central 18 est rabattu et que la direction longitudinale X du plateau 12 est sensiblement alignée avec la direction verticale, disposé au droit de cette surface effective d'appui dans la direction verticale. Lorsque le plateau 12 comporte des tablettes 24, le centre de gravité considéré est celui de la table lorsque les tablettes 24 sont en position repliée. Ainsi, la table 10 repliée peut être stockée aisément sans risque de chute, en reposant verticalement sur l'organe d'appui 28.

Avantageusement, comme cela est représenté sur la figure 2, le pied central 18 comporte, à sa première extrémité 18A, au moins un organe de maintien 36 formant une butée pour au moins l'une des tablettes 24 en position repliée lorsque le pied 18 est rabattu. Cet organe de maintien 36 permet d'empêcher le déplacement des tablettes 24 depuis leur position repliée vers leur position d'utilisation lorsque le pied 18 est rabattu (position de butée). En revanche, lorsque le pied 18 est déployé, l'organe de maintien 36 est gardé à l'écart des tablettes 24 pour dégager la trajectoire de ces tablettes 24 et autoriser leur déplacement depuis leur position repliée vers leur position d'utilisation (position de dégagement).

Par exemple, la table 10 comporte deux organes de maintien 36 agencés de part et d'autre de la partie centrale 22 du plateau, chaque organe de maintien 36 étant formé par une plaquette solidaire du pied central 18, s'étendant perpendiculairement à l'axe de la liaison pivot 26 du pied central 18. Chaque plaquette 36 étant solidaire du pied central 18, elle pivote de la même manière autour de la liaison pivot 26 entre sa position de butée et sa position de dégagement.

La manipulation de la table 10 par un opérateur lors d'un déplacement de cette table 10 va maintenant être décrite.

Préalablement, les tablettes 24 sont rabattues dans leur position repliée, afin de présenter un encombrement minimal.

Les premiers 14 et seconds 20 moyens de fixation amovible sont désactivés, pour détacher la table 10 de la paroi latérale et du sol.

Le pied central 18 est ensuite rabattu, entrainant le déplacement des organes de maintien 36 vers leurs positions de butée, si bien que les tablettes 24 sont immobilisées dans leurs positions repliées.

L'organe d'appui 28 du plateau 12 est posé sur le sol, la table 10 étant maintenue par l'opérateur à la seconde extrémité 18B du pied central 18 rabattu, plus particulièrement par l'organe de préhension 32.

La table 10 peut ainsi être aisément transportée, en roulant sur les roulettes 30 (ou glissant s'il s'agit de patins 30), jusqu'à un endroit de stockage ou un endroit où elle sera de nouveau montée.

En cas de stockage, la table 10 est disposée, de manière stable, verticalement, en reposant sur l'organe d'appui 28.

En cas de montage, la table 10 est dépliée en déployant le pied 18, libérant ainsi les tablettes 24, puis la table est fixée à la paroi latérale et au sol de manière classique.

On notera que l'invention n'est pas limitée au mode de réalisation précédemment décrit, et pourrait présenter diverses variantes sans sortir du cadre des revendications.

Par exemple, le plateau 12 pourrait ne pas comporter de partie mobile, ou comporter uniquement deux tablettes mobiles disposées de part et d'autre de la partie centrale, ou encore une unique tablette.

On peut également prévoir un organe de maintien 36 qui ne soit pas solidaire du pied 18, mais qui soit activable indépendamment du pied 18.

## Revendications

1. Table amovible (10) pour une salle, notamment une salle de passagers de véhicule de transport publique, comportant :
- un plateau (12) s'étendant, dans une direction longitudinale (X), entre un premier bord latéral (12A) portant des premiers moyens (14) de fixation amovibles à une paroi latérale de la salle, et un second bord latéral libre (12B), et
- un pied central (18) s'étendant entre une première extrémité (18A) reliée au plateau et une seconde extrémité (18B) comprenant des seconds moyens (20) de fixation amovibles au sol de la salle,
et dans laquelle la première extrémité (18A) du pied central (18) est reliée au plateau (12) par une liaison pivot (26) autorisant le pivotement du pied central (18) pour le rabattre vers l'un des premier (12A) ou second (12B) bords latéraux du plateau (12),
**caractérisée en ce que** :
- le plateau (12) comporte, à l'autre des premier (12A) ou second (12B) bords latéraux du plateau, au moins un organe d'appui (28) sur lequel le plateau (12) est destiné à prendre appui lorsque le plateau (12) est posé sur le sol, et
- l'organe d'appui (28) comporte au moins une roulette (30) ou un patin, destiné à prendre appui sur le sol lorsque le plateau (12) est posé sur le sol, et que la table (10) est maintenue par la seconde extrémité (18B) du pied central (18) rabattu.

2. Table amovible (10) selon la revendication 1, dans laquelle le pied (18) comporte un organe de préhension (32) à sa seconde extrémité (18B).

3. Table amovible (10) selon l'une quelconque des revendications précédentes, dans laquelle l'organe d'appui présente au moins trois points d'appui délimitant une surface effective d'appui sur laquelle la table (10) peut reposer en position verticale, la table (10) étant conformée pour présenter un centre de gravité, lorsque le pied central (18) est rabattu et que la direction longitudinale (X) du plateau (12) est sensiblement alignée avec une direction verticale, disposé au droit de cette surface effective d'appui dans la direction verticale.

4. Table amovible (10) selon l'une quelconque des revendications précédentes, dans laquelle le plateau (12) comporte une partie centrale (22) allongée dans la direction longitudinale (X), et au moins une tablette (24), chaque tablette (24) étant mobile en rotation autour d'une liaison pivot, d'axe parallèle à la direction longitudinale (X), par rapport à la partie centrale (22), entre une position d'utilisation et une position repliée.

5. Table amovible (10) selon la revendication 4, dans laquelle le pied central (18) porte, à sa première extrémité (18A), au moins un organe de maintien (36) mobile entre une position de butée, dans laquelle l'organe de maintien (36) formant une butée pour la tablette (24) en position repliée, empêchant le déplacement de cette tablette (24) depuis sa position repliée vers sa position d'utilisation, et une position de dégagement dans laquelle l'organe de maintien (36) libère la trajectoire de la tablette (24), autorisant le déplacement de la tablette (24) depuis sa position repliée vers sa position d'utilisation.

6. Table amovible (10) selon la revendication 5, dans laquelle l'au moins un organe de maintien (36) est lié au pied central (18), de sorte que l'organe de maintien (36) est dans sa position de butée lorsque le pied central (18) est rabattu, et dans sa position de dégagement lorsque le pied central (18) est déployé.

7. Table amovible (10) selon la revendication 6, dans laquelle l'au moins un organe de maintien (36) est formé par une plaquette solidaire du pied central (18), s'étendant perpendiculairement à un axe de la liaison pivot du pied central (18).

8. Table amovible (10) selon l'une quelconque des revendications 5 à 7, comprenant deux organes de maintien (36), disposés de part et d'autre de la partie centrale (22) du plateau (12).

9. Véhicule ferroviaire comportant une salle pour passagers, **caractérisé en ce que** la salle pour passagers est équipée d'au moins une table amovible selon l'une quelconque des revendications 1 à 8.

## Patentansprüche

1. Entfernbarer Tisch (10) für einen Raum, insbesondere einen Passagierraum eines Fahrzeugs des öffentlichen Verkehrs, umfassend:
- eine Platte (12), die sich in eine Längsrichtung (X) zwischen einem ersten Seitenrand (12A), der erste Mittel (14) zur lösbaren Befestigung an einer Seitenwand des Raums trägt, und einem zweiten freien Seitenrand (12B) erstreckt, und
- einen Mittelfuß (18), der sich zwischen einem ersten Ende (18A), das an der Platte befestigt ist, und einem zweiten Ende (18B), das zweite Mittel zur lösbaren Befestigung am Boden des Raums umfasst, erstreckt,
und bei dem das erste Ende (18A) des Mittelfußes (18) an der Platte (12) durch eine Schwenkverbindung (26) verbunden ist, die das Schwenken des Mittelfußes (12) ermöglicht, um ihn zu einem des ersten (12A) oder zweiten (12B) Seitenrands der Platte (12) umzuklappen, **dadurch gekennzeichnet, dass**:
- die Platte (12) an dem anderen des ersten (12A) oder zweiten (12B) Seitenrands der Platte mindestens ein Stützelement (28) aufweist, auf dem die Platte (12) abgestützt werden kann, wenn die Platte (12) auf den Boden gestellt wird, und
- das Stützelement (28) mindestens eine Rolle (30) oder eine Kufe aufweist, die vorgesehen ist, auf dem Boden abgestützt zu werden, wenn die Platte (12) auf den Boden gestellt wird, und dass der Tisch (10) durch das zweite Ende (18B) des umgeklappten Mittelfußes (18) gehalten wird.

2. Entfernbarer Tisch (10) nach Anspruch 1, bei dem der Fuß (18) ein Greifelement (32) an seinem zweiten Ende (18B) aufweist.

3. Entfernbarer Tisch (10) nach einem beliebigen der vorhergehenden Ansprüche, bei dem das Stützelement mindestens eine Abstützungspunkte aufweist, die eine effektive Stützfläche begrenzen, auf der der Tisch (10) in einer vertikalen Stellung ruhen kann, wobei der Tisch (10) angepasst ist, ein Schwerkraftzentrum aufzuweisen, wenn der Mittelfuß (18) zurückgeklappt ist und die Längsrichtung (X) der Platte (12) im Wesentlichen mit einer vertikalen Richtung ausgerichtet ist, wobei er geradlinig zu dieser effektiven Stützfläche in der vertikalen Richtung angeordnet ist.

4. Entfernbarer Tisch (10) nach einem beliebigen der vorhergehenden Ansprüche, bei dem die Platte (12) einen in die Längsrichtung (X) verlängerten Mittelbereich (22) und mindestens eine Tafel (24) aufweist, wobei jede Tafel (24) in der Drehung um eine Schwenkverbindung mit einer Achse parallel zur Längsrichtung (X) in Bezug auf den Mittelbereich (22) zwischen einer Benutzungsstellung und einer zusammengefalteten Stellung beweglich ist.

5. Entfernbarer Tisch (10) nach Anspruch 4, bei dem der Mittelfuß (18) an seinem ersten Ende (18A) mindestens ein Halteelement (36) trägt, das zwischen einer Anschlagsposition, in der das Halteelement (36) einen Anschlag für die Tafel (24) in der zusammengefalteten Stellung bildet, wobei die Bewegung dieser Tafel (24) von ihrer zusammengefalteten Stellung in ihre Benutzungsstellung verhindert wird, und einer Position der Freisetzung, in der das Halteelement (36) den Weg der Tafel (24) freigibt, wodurch die Bewegung der Tafel (24) von ihrer zusammengefalteten Stellung in ihre Benutzungsstellung ermöglicht wird, beweglich ist.

6. Entfernbarer Tisch (10) nach Anspruch 5, bei dem mindestens ein Halteelement (36) mit dem Mittelfuß (18) derart verbunden ist, dass das Halteelement (36) in seiner Anschlagsstellung ist, wenn der Mittelfuß (18) zurückgeklappt ist, und seiner Freisetzungsstellung ist, wenn der Mittelfuß (18) entfaltet ist.

7. Entfernbarer Tisch (10) nach Anspruch 6, bei dem mindestens ein Halteelement (36) durch ein mit dem Mittelfuß (18) verbundende Plättchen gebildet ist, das sich senkrecht zu der Achse der Schwenkverbindung des Mittelfußes (18) erstreckt.

8. Entfernbarer Tisch (10) nach einem beliebigen der Ansprüche 5 bis 7, zwei Halteelemente (36) umfassend, die sich beidseitig des Mittelbereichs (22) der Platte (12) erstrecken.

9. Schienenfahrzeug, einen Passagierraum umfassend, **dadurch gekennzeichnet, dass** der Passagierraum mit mindestens einem entfernbaren Tisch nach einem beliebigen der Ansprüche 1 bis 8 versehen ist.

## Claims

1. A removable table (10) for a room, in particular for a passenger room of a public transport vehicle, including:
- a plate (12) extending in a longitudinal direction (X), between a first lateral edge (12A) bearing first removable attachment means (14) to a lateral wall of the room, and a second free lateral edge (12B), and
- a central leg (18) extending between a first end (18A) connected to the plate and a second end (18B) comprising second removable attachment means (20) to the floor of the room,
and wherein the first end (18A) of the central leg (18) is connected to the plate (12) through a pivot connection (26) allowing pivoting of the central leg (18) for folding it back towards one of the first (12A) or second 12B) lateral edges of the plate (12),
**characterized in that**:
- the plate (12) includes, at the other one of the first (12A) or second (12B) lateral edges of the plate (12), at least one supporting member (28) on which the plate (12) is intended to be supported when the plate (12) is laid on the floor, and
- the supporting member (28) includes at least one roller (30) or a shoe, intended to bear upon the floor when the plate (12) is laid on the floor, and that the table (10) is maintained by the second end (18B) of the folded back central leg (18).

2. The removable table (10) according to claim 1, wherein the leg (18) includes a gripping member (32) at its second end (18B).

3. The removable table (10) according to claim 1, wherein the supporting member has at least three supporting points delimiting an effective supporting surface area on which the table may rest in a vertical position, the table (10) being shaped in order to have a centre of gravity, when the central leg (18) is folded back and that the longitudinal direction (X) of the plate (12) is substantially aligned with a vertical direction, positioned at right angles to this effective supporting surface area in the vertical direction.

4. The removable table (10) according to claim 1, wherein the plate (12) includes a central portion (22) elongated in the longitudinal direction (X), and at least one shelf (24), each shelf (24) being rotationally movable around a pivot connection, with an axis parallel to the longitudinal direction (X), relatively to the central portion (22), between a position of use and a folded-back position.

5. The removable table (10) according to claim 4, wherein the central leg bears (18), at its first end (18A), at least one maintaining member (36) movable between an abutment position, in which the maintaining member (36) forms an abutment for the shelf (24) in the folded-back position, preventing displacement of this shelf (24) from its folded-back position to its position of use, and a disengagement position in which the maintaining member (36) clears the trajectory of the shelf (24), allowing displacement of the shelf (24) from its folded-back position to its position of use.

6. The removable table (10) according to claim 5, wherein said at least one maintaining member (36) is connected to the central leg (18), so that the maintaining member (36) is in its abutment position when the central leg (18) is folded back, and in its disengagement position when the central leg (18) is deployed.

7. The removable table (10) according to claim 6, wherein said at least one maintaining member (36) is formed by a maintaining portion secured to the central leg (18), extending perpendicularly to an axis of the pivot connection of the central leg (18).

8. The removable table (10) according to claim 5, comprising two maintaining members (36) positioned on either side of the central (22) portion of the plate (12).

9. A railway vehicle including a room for passengers, **characterized in that** the room for passengers is equipped with at least one removable table according to any of claims 1 to 8.
